# EUROPÄISCHE PATENTANMELDUNG

(11) **EP 1 225 038 A1**
(43) Veröffentlichungstag der Anmeldung: **24.07.2002**
(21) Anmeldenummer: 01130158.7
(22) Anmeldetag: 19.12.2001
(51) Int. Cl.: B32B 29/06, E04F 15/02, B44C 5/04, B27N 7/00

(54) **Fussbodenplatte und Verfahren zu deren Herstellung**

(30) Priorität: 22.01.2001 DE 10102790
(71) Anmelder: Witex AG, 32832 Augustdorf (DE)
(72) Erfinder: Windmöller, Ulrich, 33758 Schloss Holte-Stukenbrock (DE); Kettler, Volker, 33824 Werther (DE)
(74) Vertreter: TER MEER STEINMEISTER & PARTNER GbR

(57) **Zusammenfassung**

Eine Fußbodenplatte, insbesondere ein mehrschichtiges, verpreßtes Laminatpaneel, umfaßt ein Dekorpapier (12) in der oberen Nutzschicht, das mit einem aminoplastischen Harz oder dergleichen getränkt ist. Auf die Rückseite des Dekorpapiers (12) sind Partikel eines elektrisch leitenden Materials aufgebracht.

Bei einem Verfahren zur Herstellung einer Fußbodenplatte, insbesondere eines mehrschichtigen, in einem Schritt verpreßten Laminatpaneels, das als obere Nutzschicht ein Dekorpapier (12) aufweist, das mit einem aminoplastischen Harz imprägniert worden ist sind auf die Rückseite des mit einem Melaminharz getränkten Dekorpapiers (12) Partikel eines elektrisch leitenden Materials aufgebracht.

## Beschreibung

Die Erfindung betrifft eine Fußbodenplatte, insbesondere ein mehrschichtiges, verpreßtes Laminatpaneel, mit einem Dekorpapier in der oberen Nutzschicht, das mit einem aminoplastischen Harz oder dergleichen getränkt ist, sowie ein Verfahren zu deren Herstellung.

Derartige Fußbodenplatten sind in vielen Ausführungsformen bekannt. Beispiele werden in der US 4.426.820, der GB 2256023 A oder der EP 0 698 162 B1 beschrieben. Laminatbodenbeläge dieser Art sind elektrostatisch aufladbar. Begehversuche nach ISO 1815 haben gezeigt, daß Spannungen bis zu 5,5 kV auftreten können. Der menschliche Körper ist in der Lage, Spannungen bis zu 2 kV abzubauen. Höhere Spannungen werden als elektrischer Schlag empfunden.

Zur Unterdrückung derartiger Spannungen gibt es bisher insbesondere Lösungen, die sich auf Doppelböden für Computerräume beziehen. Derartige Doppelböden besitzen Melaminharz-beschichtete Oberflächen und werden als Hochdrucklaminate mit mehreren graphitgetränkten Kraftpapieren hinter einer Dekorschicht verpreßt. Bei Laminatböden der hier in interessierenden Art, die im sogenannten Direktbeschichtungsverfahren hergestellt werden, ist es jedoch erforderlich, daß alle Lagen einschließlich der Dekorlage in einem Schritt mit einer Trägerplatte ohne zusätzlichen Kleber verpreßt werden können. Bei dieser Technologie ist es nicht möglich, Kraftpapier-Lagen hinter der Dekor-Lage in einem Arbeitsgang ohne zusätzlichen Kleber zu integrieren.

Der Erfindung liegt daher die Aufgabe zugrunde, eine Fußbodenplatte der obigen Art zu schaffen, die es gestattet, elektrostatische Aufladungen so weit wie möglich, insbesondere auf Werte unter 2 kV einzuschränken.

Diese Aufgabe wird erfindungsgemäß bei einer Fußbodenplatte der obigen Art dadurch gelöst, daß auf die Rückseite des Dekorpapiers Partikel eines elektrisch leitenden Materials aufgebracht sind.

Bei der überwiegenden Zahl der Laminatfußböden wird auf der Ober- oder Nutzseite das harzgetränkte, imprägnierte Dekorpapier durch ein transparentes Spezial-Zellulosepapier abgedeckt. Versuche, diese Zellulose-Schicht, die im allgemeinen auch als Overlay bezeichnet wird, mit elektrisch ableitfähigen Harzen zu imprägnieren, haben nicht zum Erfolg geführt. Insbesondere kommt es zur Verschlechterung der Transparenz der Zellulose-Schicht, also zu einer milchigen Eintrübung, die nicht akzeptiert werden kann. Bei einer erfindungsgemäßen Aufbringung leitender Partikel auf die Rückseite des Dekorpapiers treten vergleichbare Probleme nicht auf.

Als elektrisch leitende Materialien kommen beispielsweise Eisenpulver oder insbesondere Graphitstaub in Betracht. Verwendbar sind jedoch auch Partikel anderer elektrisch leitender Materialien, insbesondere anderer Metalle.

Der Begriff der "Partikel" soll hier in einem sehr weiten Sinne verstanden werden. In Betracht kommen neben den bereits erwähnten Pulvern und Stäuben auch feine Granulate, Späne, Fasern, insgesamt also alle Formen von weitgehend gleichmäßig über eine Fläche verteilbaren Teilchen. Grundsätzlich kommen auch alle leitenden Materialen in Betracht, so daß hier unter wirtschaftlichen Gesichtspunkten Eisenpulver und Graphitstäube vorzuziehen sein werden, keineswegs aber die einzig realisierbare Lösung darstellen. Als Alternativen können etwa Kohlstoff-Fasern, elektrisch leitfähige Ruße oder auch andere Metallpulver, etwa Kupferpulver oder ein Pulver einer Metall-Legierung auf Kupferbasis verwendet werden.

Bei dem erfindungsgemäßen Verfahren wird auf die Rückseite des mit einem aminoplastischen Harz getränkten Dekorpapiers ein elektrisch leitendes Material in der Form von Partikeln, insbesondere Pulvern oder Stäuben aufgebracht, bevor das Dekorpapier mit den übrigen Lagen des Laminats verpreßt wird.

Die Imprägnierung des Dekorpapiers, die insbesondere mit aminoplastischen Harzen, z.B. Melaminharz erfolgt, macht es erforderlich, das Harz in einem Wärmeofen, der von dem Dekorpapier durchlaufen wird, teilzuhärten. Im Rahmen dieses Verfahrens können die elektrisch leitenden Partikel vor dem Einlauf des Dekorpapiers in den Wärmeofen oder - bei einem zweistufigen Wärmeofen - auf das vorgehärtete Harz zwischen der ersten und zweiten Stufe aufgetragen werden. In diesem Falle verbindet sich das Harz mit den Partikeln in der zweiten Stufe des Wärmeofens bei der Teilaushärtung des Harzes. Die Endaushärtung erfolgt später bei der Laminatherstellung in der Presse, in der das Sandwich aus Dekorpapier, ggfs. mit Overlay, Trägerplatte und Gegenzug unter hoher Hitze und Druck verpreßt wird.

Es ist auch denkbar, die elektrisch leitenden Partikel in das Imprägnierharz vor dessen Aufbringung auf das Dekorpapier einzumischen.

Es hat sich gezeigt, daß durch die Einbettung von elektrisch leitenden Partikeln in die aminoplastische Harzmasse über die Imprägnierung der Dekorpapiere keine Nachteile in Kauf genommen werden müssen. Bei den bisherigen Versuchen der Verwendung von leitfähigen Melaminharzen mit Zusätzen für die Imprägnierung des Overlays ergab sich beispielsweise eine Verschlechterung der Feuchtigkeitsaufnahme oder eine Verschlechterung der Transparenz der Dekorschicht, d.h., eine milchige Eintrübung der Oberfläche.

Als Harze eignen sich insbesondere Aminoplaste, vor allem Melaminharze und Phenolharze.

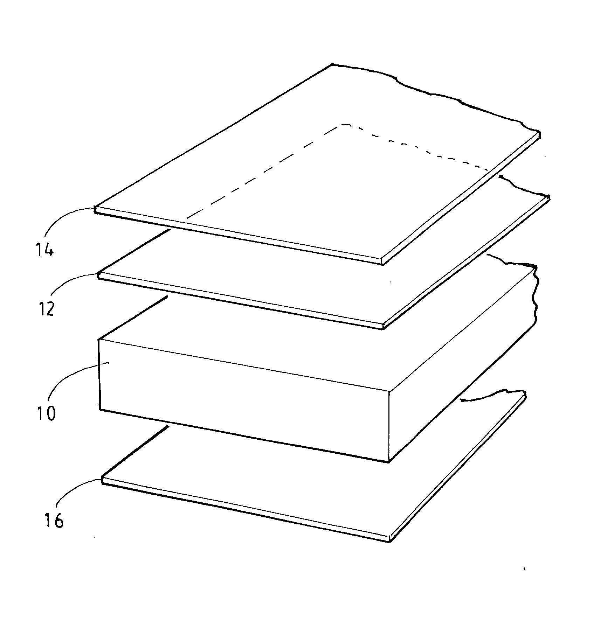

Im folgenden werden bevorzugte Ausführungsbeispiele der Erfindung anhand der beigefügten Zeichnung näher erläutert.

Die einzige Figur ist eine perspektivische Darstellung eines erfindungsgemäßen Laminats vor dem Pressen.

Ein erfindungsgemäßes Laminat besteht im Kern aus einem Träger 10, insbesondere einer Holzfaserplatte aus MDF- oder HDF-Material. Nach dem Pressen wird das Laminat in einzelne Paneele zerschnitten, und an den Kanten des Trägers wird durch Fräsen ein modifiziertes Nut-Feder-Profil hergestellt, das es gestattet, beim Verlegen die einzelnen Paneele miteinander zu verbinden.

Auf der oberen Seite des Trägers 10 befindet sich ein Dekorpapier 12, das beispielsweise mit einem Holzdekor bedruckt ist. Dieses Dekorpapier 12 wird mit einem aminoplastischen Kunstharz imprägniert, und auf die Rückseite dieses Dekorpapiers, also auf die in der Zeichnung unten liegende Seite, werden Partikel eines leitenden Materials aufgebracht, etwas Graphitstaub oder Eisenspäne. Dies kann geschehen unmittelbar nach dem Aufbringen des Kunstharzes auf das Dekorpapier vor Beginn des Vorhärtens des Kunstharzes, das in einem Wärmeofen geschieht, oder, bei einem geteilten Wärmeofen, der in Durchlaufrichtung unterbrochen ist, zwischen dem ersten und dem zweiten Teil des Vorhärtvorganges. Bei diesem Vorhärten wird das Kunstharz nicht vollständig ausgehärtet, sondern es verbleibt in einem klebrigen Zustand, der das spätere Verpressen mit dem Träger 10 gestattet.

Auf das Dekorpapier wird in vielen Fällen ein transparentes, speziell angefertigtes Zellulosepapier gelegt, in das Korundpartikel eingewebt sind oder das mit Korundpartikeln imprägniert wurde, die dem Laminat die gewünschte Verschleißfestigkeit und Härte für den längerfristigen Gebrauch verleihen.

Schließlich befindet sich unterhalb des Trägers 10 eine Schicht, die im allgemeinen als Gegenzug 16 bezeichnet wird und die verhindert, daß sich der Träger 10 aufgrund einer etwaigen Schrumpfung des Dekorpapiers 12 nach dem Pressen nach oben wölbt.

Es ist auch möglich, auf den Gegenzug 16 elektrisch leitende Partikel im zuvor definierten Sinne aufzubringen. Die Aufbringung der elektrisch leitenden Partikel auf den Gegenzug 16 kann die zuvor beschriebene Aufbringung der elektrisch leitenden Partikel auf das Dekorpapier in ihrer Wirkung ergänzen und verstärken, ist aber für sich allein wirksam im Sinne eines Spannungsabbaus.

## Patentansprüche

1. Fußbodenplatte, insbesondere mehrschichtiges, verpreßtes Laminatpaneel, mit einem Dekorpapier (12) in der oberen Nutzschicht, das mit einem aminoplastischen Harz oder dergleichen getränkt ist, **dadurch gekennzeichnet, daß** auf die Rückseite des Dekorpapiers (12) Partikel eines elektrisch leitenden Materials aufgebracht sind.

2. Fußbodenplatte nach Anspruch 1, **dadurch gekennzeichnet, daß** das elektrisch leitende Material ein Eisenpulver ist.

3. Fußbodenplatte nach Anspruch 1, **dadurch gekennzeichnet, daß** das elektrisch leitende Material ein Kupferpulver ist.

4. Fußbodenplatte nach Anspruch 1, **dadurch gekennzeichnet, daß** das elektrisch leitende Material ein Pulver einer Metall-Legierung auf Kupferbasis ist.

5. Fußbodenplatte nach Anspruch 1, **dadurch gekennzeichnet, daß** das elektrisch leitende Material Graphitstaub ist.

6. Fußbodenplatte nach Anspruch 1, **dadurch gekennzeichnet, daß** das elektrisch leitende Material aus Kohlenstoff-Fasern besteht.

7. Fußbodenplatte nach Anspruch 1, **dadurch gekennzeichnet, daß** das elektrisch leitende Material elektrisch leitfähiger Ruß ist.

8. Fußbodenplatte nach Anspruch 1, **dadurch gekennzeichnet, daß** das aminoplastische Harz ein Melaminharz ist.

9. Fußbodenplatte nach einem der Ansprüche 1 bis 8, bei der auf der Rückseite eines Trägers ein Gegenzug (16) befestigt ist, der eine Wölbung des Trägers beim Schrumpfen des Dekorpapiers unterdrückt, **dadurch gekennzeichnet, daß** auf den Gegenzug (16) elektrisch leitende Partikel aufgebracht sind.

10. Verfahren zur Herstellung einer Fußbodenplatte, insbesondere eines mehrschichtigen, in einem Schritt verpreßten Laminatpaneels, das als obere Nutzschicht ein Dekorpapier (12) aufweist, das mit einem aminoplastischen Harz imprägniert worden ist, **dadurch gekennzeichnet, daß** auf die Rückseite des mit einem Harz getränkten Dekorpapiers (12) Partikel eines elektrisch leitenden Materials aufgebracht sind.

11. Verfahren nach Anspruch 10, **dadurch gekennzeichnet, daß** die elektrisch leitenden Partikel in das frische, noch nicht ausgehärtete Harz eingestreut werden.

12. Verfahren nach Anspruch 10 oder 11, **dadurch gekennzeichnet, daß** die elektrisch leitenden Partikel durch Graphitstaub gebildet werden.

13. Verfahren nach Anspruch 10 oder 11, **dadurch gekennzeichnet, daß** die elektrisch leitenden Partikel durch Kohlstoff-Fasern gebildet werden.

14. Verfahren nach Anspruch 10 oder 11, **dadurch gekennzeichnet, daß** die elektrisch leitenden Partikel durch elektrisch leitfähigen Ruß gebildet werden.

15. Verfahren nach Anspruch 10 oder 11, **dadurch gekennzeichnet, daß** die elektrisch leitenden Partikel durch Eisenpulver gebildet werden.

16. Verfahren nach Anspruch 10 oder 11, **dadurch gekennzeichnet, daß** die elektrisch leitenden Partikel durch Kupferpulver gebildet werden.

17. Verfahren nach Anspruch 10 oder 11, **dadurch gekennzeichnet, daß** die elektrisch leitenden Partikel durch Metallpulver einer Kupferlegierung gebildet werden.

18. Verfahren nach einem der Ansprüche 10 bis 17, **dadurch gekennzeichnet, daß** die elektrisch leitenden Partikel auf das Dekorpapier (12) vor dem Durchlauf durch einen Wärmeofen aufgebracht werden.

19. Verfahren nach einem der Ansprüche 10 bis 17, **dadurch gekennzeichnet, daß** die elektrisch leitenden Partikel auf das Dekorpapier (12) zwischen der ersten und der zweiten Stufe eines zweistufigen Imprägnierungsofens nach der ersten Vorhärtung des Harzes aufgebracht werden.

20. Verfahren nach Anspruch 10, **dadurch gekennzeichnet, daß** die Partikel des elektrisch leitenden Materials in Mischung mit dem Harz auf das Dekorpapier (12) aufgebracht werden.

21. Verfahren nach einem der Ansprüche 10 bis 10, **dadurch gekennzeichnet, daß** das Harz ein Melaminharz ist.
